# EUROPEAN PATENT SPECIFICATION

(11) **EP 4 405 230 B1**
(45) Date of publication and mention of the grant of the patent: **01.04.2026**
(21) Application number: 22786972.4
(22) Date of filing: 23.09.2022
(51) Int. Cl.: B62B 3/10, B62B 5/04, B62B 5/06

(54) **TROLLEY**
HANDWAGEN
CHARIOT

(30) Priority: 24.09.2021 GB 202113663
(43) Date of publication of application: 31.07.2024
(73) Proprietor: Armorgard Holdings Limited, Fareham, Hampshire PO16 8XB (GB)
(72) Inventor: HAYWARD, Tom, Fareham Hampshire PO16 8XB (GB); PARTRIDGE, Matthew, Fareham Hampshire PO16 8XB (GB)
(74) Representative: Murgitroyd & Company
(86) International application number: PCT/GB2022/052425
(87) International publication number: WO 2023/047135

(56) References cited:
- EP-A1- 3 835 172
- GB-A- 2 002 301
- GB-A- 2 576 394
- US-B1- 6 409 187

## Description

### Field of the Invention

The present invention relates to a load bearing manual handling trolley apparatus.

### Background to the Invention

Manual handling aides such as trolleys, wheeled units, carts and mobile storage racks are used in many industries to transport and store materials and goods which may be too large, too heavy, dangerous or awkward to be transported by hand.

Safe, fast and secure braking is paramount to prevent damage or injury to the operator, transported goods and surrounding environment, especially given the often heavy, precious or fragile nature of the loads carried.

Known aids often provide foot operated brakes located at each wheel or castor. These brakes are awkward to reach due to their location underneath the trolley and it is cumbersome for the operator to manually access and engage/disengage each brake individually. Further, it is likely unobvious to the operator if each brake is engaged or disengaged when approaching the aide. In this way, safety may be compromised, for example, if the aide is stationary and the operator believes the brakes are engaged when they are not. Some known aids provide multiple-handle braking; such that two or more operators are required to halt or prevent motion the trolley. As such, braking of the trolley by a single operator from a single point is not possible and safety is compromised.

It is advantageous to provide a manual handling apparatus that also functions as a workbench, as it improves ease of loading goods onto the apparatus and further allows a user to action the loaded goods in situ. Additionally, when transporting large goods such as pipework and boards, it can be challenging to fit the manual handling apparatus with the loaded goods through narrow spaces, such as corridors and doorways.

There is therefore a need for improved manual handling aides which provide a safer, easier and more accessible way to transport goods and to halt or prevent motion of the aide.

Objects and aspects of the present claimed invention seek to alleviate at least these problems with the prior art.

US 6,409,187 relates to a brake system for a cart.

GB 2,002,301 relates to a transporting trolley.

### Summary of the invention

There is provided a load bearing manual handling trolley apparatus, the trolley apparatus comprising: a frame comprising a base, the base comprising a front face, a rear face and two connecting faces arranged so as to form a supportive base with four corners; the trolley apparatus further comprising a pivotable member pivotably connected to the frame, the pivotable member configured to pivot between a first position and a second position; at least one wheel located at each corner portion of the base; a brake mechanism comprising a wheel unit and a wheel brake apparatus for engaging the wheel unit, the wheel unit comprising at least one wheel; at least one handle member located on the frame; an elongate member, the elongate member connecting each of the at least one handle members to the brake mechanism, and arranged in operative communication with the wheel brake apparatus and arranged to actuate the wheel brake apparatus such that actuation of any one of the at least one handle members decouples the brake mechanism; wherein the elongate member is arranged to rotate about its longitudinal axis and actuation of the at least one handle member rotates the elongate member about its longitudinal axis; wherein the elongate member is biased to the braked configuration, wherein a portion of said at least one handle member projects beyond the length of said pivotable member; characterised in that said at least one handle member is telescopic in a direction away from said frame.

In this way, a trolley apparatus with a safer, easier and more accessible braking system is provided. The trolley apparatus allows safe and efficient storage and transportation of various length and sizes of boards, panels, ductwork, pipe and other materials. The pivotable member can be pivoted to reduce the footprint of the trolley apparatus, allowing the trolley apparatus and its load to fit through narrower spaces such as corridors and doorways. The user can load the pivotable member with goods, such as boards, sheets and/or pipework, such that the pivotable member accommodates the goods and supports the load during transportation.

The apparatus of the invention reduces risk of injury to persons and damage to goods transported and stored on the apparatus. Additionally, the number of persons required to move the trolley apparatus is not limited to a minimum number, as a single person is able to safely manoeuvre and park the apparatus. Further, persons are not able to override the brake system, improving safety. The brake mechanism can be used as a full stop of a brake with full release, or, as it is a friction dead-man brake and not a slotted disc-brake, the brake can also be used to slow and control the trolley. In this way, the trolley apparatus can undergo a gradual stopping motion rather than abrupt 'peg in slot' stopping. As such, a 'dead man' braking system is provided.

A portion of the at least one handle member projects beyond the length of the pivotable member. In this way, the user can easily access the at least one handle member when goods are loaded onto the pivotable member, in use. The at least one handle member is telescopic in a direction away from the frame. In this way, the handle member can be telescopically extended outwards from the frame and retracted back to the non-telescopic position.

For example, a board of length greater than the length of the trolley apparatus can be loaded onto the trolley apparatus and the at least one handle member can be extended such that a portion of the at least one handle member extends beyond the length of the board. In this way, the user can actuate the at least one handle member from a location distal any load on the trolley apparatus, improving the safety to the user. Further, the user can easily reach the handle member without unduly limiting the length of the load that can be applied to the trolley apparatus or risking the safety of the user.

Preferably, the at least one handle member is located at an end of the elongate member. Preferably, the at least one handle member is rotably coupled to the elongate member. In this way, direct rotation of the at least one handle member about its longitudinal axis is translated into direct rotation of the elongate member about its longitudinal axis.

Preferably, the elongate member extends along substantially the entire length of the frame. In this way, a handle member can be located at the two distal ends of the elongate member such that both handle members are coupled to the elongate member and one another.

Preferably, the pivotable member comprises at least one hand accommodation portion. In this way, a user can manually pivot the pivotable member via the at least one hand accommodation portion. Preferably, the at least one hand accommodation portion is located at the perimeter of the pivotable member. Preferably, the at least one hand accommodation portion comprises one hand accommodation portion located centrally along a face of the pivotable member.

Preferably, the at least one hand accommodation portion is telescopic. Preferably, the at least one hand accommodation portion is configured to be removably retained at a plurality of telescopically extended positions. Preferably, the at least one hand accommodation portion comprises a locking member configured to lock the at least one hand accommodation portion in each of the plurality of telescopically extended positions. In this way, the at least one hand accommodation portion can be locked at a number of different telescopic extensions, depending on the size of the load, the leverage force required by the user and/or the ergonomics of the user including the required height and strength capability. Preferably, the at least one hand accommodation portion comprises a non-telescopic position wherein substantially no portion of the at least one hand accommodation portion extends beyond the perimeter of the pivotable member. In this way, the footprint of the trolley apparatus can be reduced.

Preferably, the pivotable member comprises a counterbalance unit configured to prevent rotation of the pivotable member unless a force is applied to the at least one hand accommodation portion. In this way, when a load is removed from the pivotable member, the pivotable member does not return to its natural position under gravity. For example, when the pivotable member is in the first position and a load is removed from the pivotable member, the pivotable member does not automatically pivot to the second position. Such a feature improves safety of the trolley apparatus and prevents 'trebuchet' motion of the pivotable member regardless of the load on the trolley apparatus. The pivotable member can be pivoted whilst unloaded or whilst loaded without a 'jerk' motion which would risk harm to the user. More preferably, the counterbalance unit comprises at least one pneumatic member, the pneumatic member connecting the frame to the pivotable member. For example, the pneumatic member may be a gas spring, gas strut or other suitable pneumatic damping mechanism. Alternatively or additionally, the counterbalance comprises at least one mechanical damping member, for example a spring. Alternatively or additionally, the counterbalance unit comprises at least one hydraulic member. For example, the hydraulic member may comprise a hydraulic ram.

Preferably, the counterbalance unit comprises two pneumatic members located at opposing distal ends of the frame. Alternatively, the counterbalance unit comprises three pneumatic members with a first and second pneumatic member located at each end of two opposing sides of the pivotable member and a third pneumatic member located equidistant the first and second pneumatic member. In this way, the pneumatic members are located equidistant along the length of the pivotable member. In select embodiments, the counterbalance unit comprises one pneumatic member. In such embodiments, the pneumatic member is located equidistant either end of the pivotable member.

Preferably, the at least one pneumatic member is connected at a first end to the frame and is connected at a second end to the pivotable member. More preferably, the at least one pneumatic member is connected at a first end of the upstanding portion. Preferably, the at least one pneumatic member is connected at a second end to the underside of the pivotable member. Namely, the underside of the pivotable member is the surface of the pivotable member facing the upstanding portion when the pivotable member is in the second position.

Preferably, the at least one pneumatic member comprises an adjustable member configured to adjust the location of the connection of the second end to the pivotable member. Advantageously, the adjustable member assists with the pivoting force of the pivotable member depending on which direction the pivotable member is pivoting in between the first and second position. Such a feature reduces the skew that would occur in the counterbalance assistance of the at least one pneumatic member. Preferably, the adjustable member is configured to adjust the connection of the second end to the pivotable member along a linear pathway. Preferably, each pneumatic member of the at least one pneumatic member comprises an adjustable member. Preferably, the counterbalance unit comprises a locking unit configured to lock the pivotable member in the first position and/or the second position. Preferably, pivot motion of the pivotable member is independent of the brake mechanism. In this way, the brake mechanism can be actuated independent of the position of the pivotable member.

Preferably, the pivotable member is connected to the frame along the longitudinal axis of the frame. Preferably, the frame comprises an upstanding portion extending along a portion of its longitudinal axis and in a direction away from the base, the pivotable member connected to the upstanding portion. In this way, the pivotable member can be mounted at a height such that the pivotable motion of the pivotable member about the frame is not obstructed by the base of the frame.

Preferably, in the first position, the pivotable member is substantially parallel to the base. In this way, the pivotable member can be positioned substantially horizontally to the surface which the trolley apparatus is traversing. The first position allows a user to easily load and action goods, such as boards and panels, on the trolley apparatus such that the trolley apparatus doubles as a workbench and workstation. In select embodiments, the first position is equal to the second position. In this way, the pivotable member is not configured to pivot.

Preferably, in the second position, the pivotable member is substantially flat against the frame. More preferably, in the second position, the pivotable member is substantially flat against the upstanding portion, at an acute angle to the normal axis of the base of the frame. Preferably, the acute angle is between 0 and 30 degrees.

Preferably, the wheel brake apparatus comprises an at least one brake pad, the at least one brake pad arranged to engage with the at least one wheel of the wheel unit so as to urge the wheel into a stationary braked position. Preferably, the wheel brake apparatus comprises a friction brake. Alternatively, the wheel brake apparatus comprises a disc brake.

Preferably, the wheel brake apparatus is located at a perpendicular intersection of the longitudinal axis of the base. More preferably, the wheel unit is located proximate the centre of the base. In this way, the weight of the trolley apparatus and its load can be substantially evenly distributed about the wheel brake apparatus. Preferably, the wheel unit comprises two wheels. Preferably, the wheel unit comprises two wheels located at opposing sides of the base. In this way, the distribution of weight of the trolley is more evenly spread and the toppling moment of the trolley apparatus over the wheel unit is reduced. Further, two wheels at or close to the centre of mass of the base of the trolley improves manoeuvrability, in particular turning the trolley in a circle, over a single wheel in the same location.

Alternatively, the brake mechanism is located at each of the at least one wheel located at each corner portion of the base. In such embodiments, it is preferred that the wheel unit comprises two wheels located at opposing sides of the base at the perpendicular intersection of the longitudinal axis of the base. Namely, the wheel unit comprises two wheels located centrally on the long sides of the base.

Preferably, the wheels are selected from the range; fixed wheels, fixed castors, swivel castors and glides. It is envisaged that any suitable wheel type may be used, preferably wheels which provide little resistance to motion of the trolley apparatus, such that the trolley apparatus is easier to manoeuver, and the wheels are fit for use on the terrain/s the trolley apparatus will be traversing. Most preferably, the wheels are swivel castors.

Use of castors improves manoeuvrability of the trolley apparatus and the trolley apparatus is not limited to movement in a limited number of directions, such as a single direction. The trolley is able to be parked and consequently moved again in any direction, depending on the external environment and obstacles to motion of the trolley. The at least one wheel located at each corner of the base helps stabilise the load of the trolley apparatus.

Preferably, the brake mechanism comprises an elongate brake member coupled to each wheel of the wheel unit and wherein the elongate brake member is configured to rotate about its longitudinal axis. Preferably, the elongate brake member is a bar with hexagonal cross section. Preferably, the brake mechanism comprises a cable connected to the elongate member. In some embodiments, the cable comprises a plurality of cables. Alternatively, the wheel brake apparatus comprises at least one rod connected to the elongate member.

Preferably, the brake mechanism further comprises at least one cam configured to transfer linear motion of the cable to rotational motion via the elongate brake member. Preferably, the cable is coupled to the at least one cam. Preferably, the at least one cam comprises an arm in communication with the cable and the elongate brake member. **In** this way, the length of the arm can be extended to increase the leverage and moment force on the elongate brake member.

Preferably, the cable is non-extensible. Preferably, the tension in the cable is adjustable. In this way, there is provided an improved ease of set-up and maintenance. Preferably, the cable is under continuous tension. Alternatively, the cable is slack until a handle member is actuated. In this way, actuation of the handle member introduces tension in the cable.

Preferably, the brake mechanism comprises at least one resilient member operably coupled to the cable. More preferably, the resilient member biases the brake mechanism to a brake position. Preferably, the resilient member is connected to the elongate brake member via the cam. Preferably, each resilient member is also connected to a fixed portion of the brake mechanism. In alternative embodiments, the resilient member is instead connected to the base of the frame. Preferably, the cam provides at least one weld to connect the cam to the resilient member and/or the brake mechanism.

Preferably, the frame is hollow. In this way, the weight of the trolley apparatus can be reduced, improving ease of manoeuvrability. Alternatively, the frame may be a solid structure such that load bearing capacity of the trolley apparatus is increased. For example, the frame may be a box section frame or a sheet metal frame.

Preferably, the base of the frame is an open structure comprising a plurality of beams. In alternative embodiments, it is envisaged that the base is a solid or closed structure or formed in any appropriate way for transporting loads.

In some embodiments, the at least one handle member is substantially T-shaped. It is envisaged that the at least one handle member may be any suitable shape, in particular a shape to assist rotation of the at least one handle member about its longitudinal axis.

In some embodiments, one or more of the wheels comprise a manual brake. For example, one or more wheels may comprise a foot-operated brake. In this way, additional braking means is provided for safety.

Preferably, the trolley apparatus comprises at least one load retention portion configured to retain at least a portion of a load on the trolley apparatus. Preferably, the at least one load retention portion comprises a retaining member and a retaining member acceptance portion. For example, the load retention portion may comprises at least one strap, rope, elastic cord, clamp, tie, cut-out portion and/or clip. The retaining member may be, for example, a strap and the retaining member acceptance portion may be a cut out or lay located on the trolley apparatus for accepting and removably retaining the retaining member in the retaining member acceptance portion. The retaining member may be extensible or inextensible. The retaining member may be removably retainable on the trolley such that the type of retaining member can be selected based on the load of the trolley. Preferably, the at least one load retention portion is located on the pivot member. More preferably, the at least one load retention portion extends about at least two faces of the pivotable member. Preferably, a portion of the load retention member is located on the underside of the pivot member. For example, the retaining member acceptance portion may be located on the underside of the pivot member.

Preferably, the trolley apparatus comprises a carrying member configured to allow the trolley apparatus to be carried by a transportation apparatus. More preferably, the trolley apparatus comprises a forklift carrying member configured to allow the trolley apparatus to be carried by a forklift truck. Preferably, the forklift carrying member is located on the underside of the base.

It is envisaged that the trolley apparatus may be configured to carry a single type of load such as, for example, boards, sheets, panels or pipework. More preferably, the trolley apparatus is configured to carry a plurality of different loads. In this way, a versatile trolley apparatus is provided.

### Detailed Description

Embodiments of the present invention will now be described by way of example only and with reference to the accompanying drawings, in which:
Figure 1 depicts a perspective view of an embodiment of the trolley apparatus according to the first aspect of the invention, the pivotable member in the second position;
Figure 2 depicts a perspective view of the trolley apparatus of Figure 1, the pivotable member in the first position;
Figure 3 depicts a deconstructed view of the brake mechanism of the trolley apparatus of Figure 1;
Figure 4 depicts a deconstructed view of the cable of the trolley apparatus of Figure 1;
Figure 5 depicts a deconstructed view of the arm of the trolley apparatus of Figure 1;
Figure 6 depicts a deconstructed view of the wheel unit of the trolley apparatus of Figure 1;
Figure 7 depicts a perspective view of the underside of the trolley apparatus of Figure 1;
Figure 8 depicts a perspective view of the underside of the pivotable member of the trolley apparatus of Figure 1;
Figure 9 depicts a perspective view of a handle member of the trolley apparatus of Figure 1;
Figure 10 depicts a perspective view of the ratchet straps of trolley apparatus of Figure 1; and
Figure 11 depicts a perspective view of the hand accommodation portion of the trolley apparatus of Figure 1; and
Figure 12 depicts a perspective view of a pneumatic member of a second embodiment of the trolley apparatus of Figure 1.

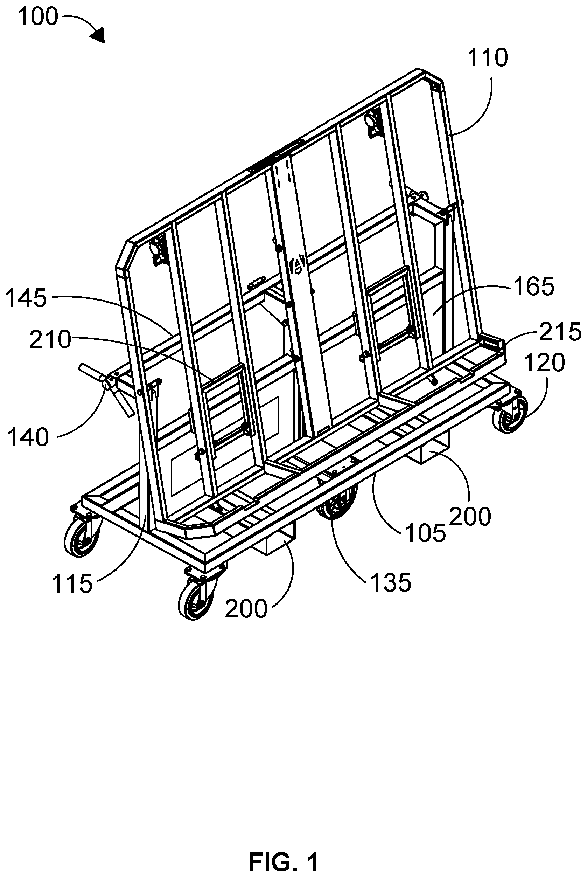

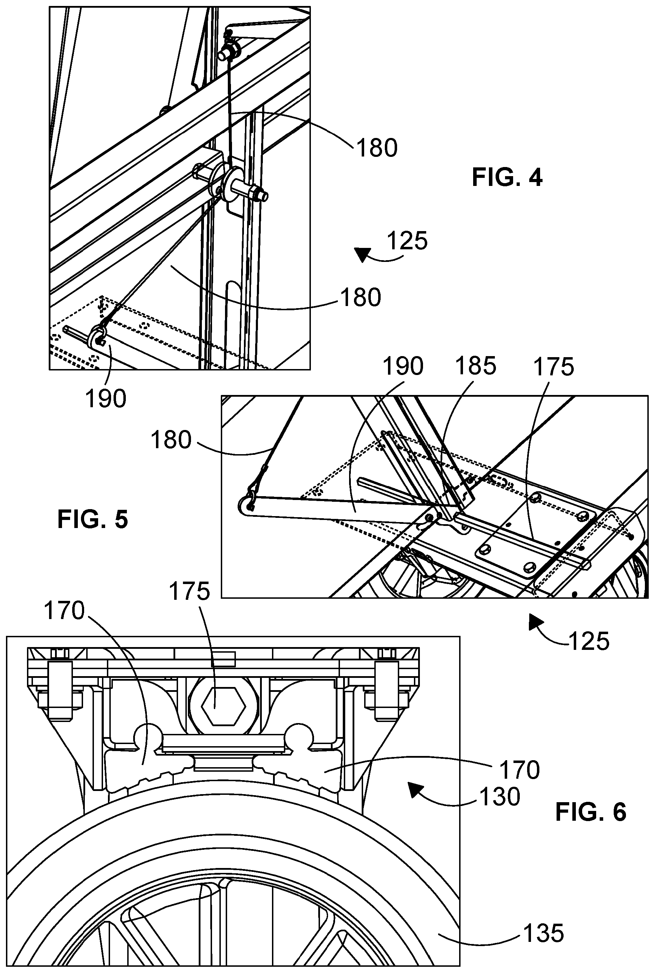

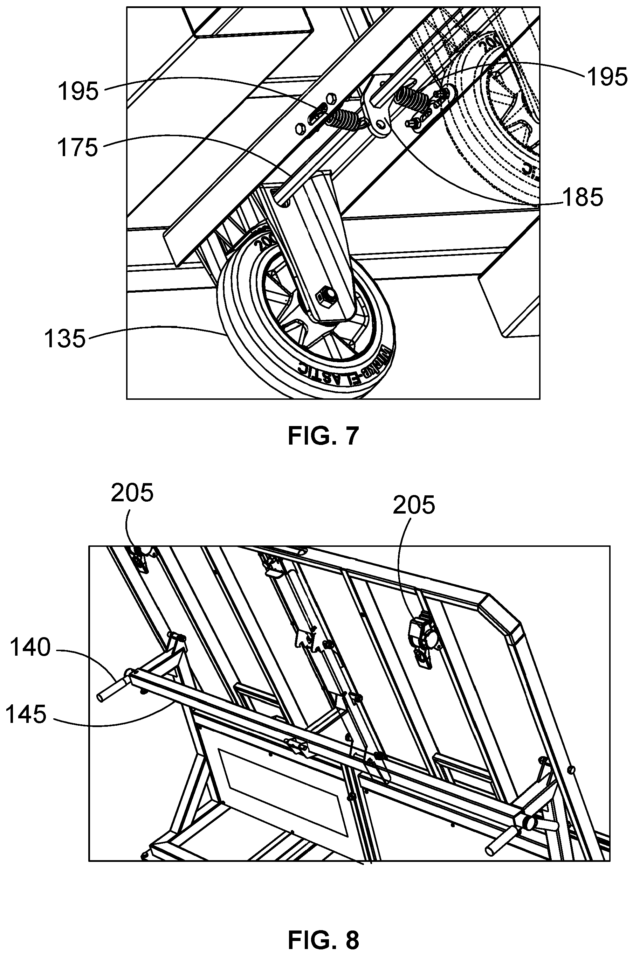

With reference to Figures 1-11, an embodiment of a load bearing manual handling trolley apparatus 100 in accordance with the present invention is depicted. The trolley apparatus comprise a frame 115 comprising a base 105. The base 105 comprises a front face, a rear face and two connecting faces arranged so as to form a supportive base with four corners. The frame 115 further comprises an upstanding portion 165 extending along a portion of the frame's 115 longitudinal axis and in a direction away from the base 105. The upstanding portion 165 has a substantially rectangular body and extends in a direction normal to the base 105. The trolley apparatus 100 further comprises a castor wheel 120 located at each corner portion of the base 105.

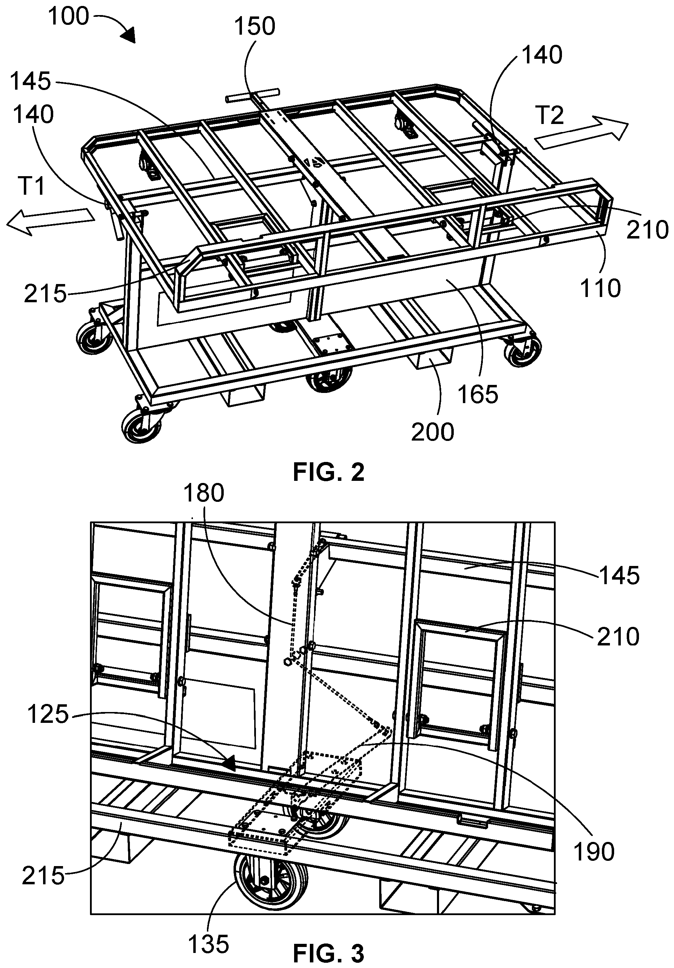

The trolley apparatus 100 further comprises a pivotable member 110 pivotably connected to the frame 115, the pivotable member 110 configured to pivot between a first position (as shown in Figure 2) and a second position (as shown in Figures 1, 3, 8 and 9). In the first position, the pivotable member 110 is substantially parallel to the base and in the second position, the pivotable member 110 is substantially flat against the upstanding portion 165 at an acute angle to the normal axis of the base 105 of the frame 115.

The trolley apparatus further comprises a brake mechanism 125 comprising a wheel unit and a wheel brake apparatus 130 for engaging the wheel unit, the wheel unit comprising two wheels 135, the two wheels 135 located at opposing sides of the base 105. The wheels 135 are fixed directional castor wheels.

The trolley apparatus 100 comprises two handle members 140 located on the frame 115. Each handle member 140 is telescopic in a direction T1, T2 away from the frame 115, as illustrated in Figure 2. Each handle member 140 can be independently telescopically extended outwards from the frame 115 and retracted back to the non-telescopic position shown in Figure 2. The user can load the pivotable member 110 with a load, such as a plurality of panels, and telescopically extend the pivotable member 110 beyond the length of the load on the pivotable member 100 such that the user has easy access to each handle member 140 without interference of the load.

Each handle member 140 is substantially T-shaped to aid rotation of the handle member 140 about its longitudinal axis.

The trolley apparatus 100 comprises an elongate member 145, the elongate member 145 connecting each of the two handle members 140 to the brake mechanism 125, and arranged in operative communication with the wheel brake apparatus 130 and arranged to actuate the wheel brake apparatus 130 such that actuation of any one of the two handle members 140 decouples the brake mechanism 125. The elongate member 145 is arranged to rotate about its longitudinal axis and actuation of the at least one handle member 145 rotates the elongate member 145 about its longitudinal axis. The elongate member 145 is biased to the braked configuration.

A handle member 140 is located at either distal end of the elongate member 145 and both handle members 140 are fixed and rotably coupled to the elongate member 145 such that rotation in either handle member 140 corresponds to an equal rotation in the elongate member 145. The elongate member 145 extends substantially the entire length of the frame 115. A user can actuate a handle member 140 by twisting the handle member 140 about its longitudinal axis in a first direction to disengage the brake. The user can then remove the force on the handle member 140, or twist the handle member 140 in the opposing direction to engage the brake. The rotational motion of the handle member 140 is independent of the telescopic motion of the handle member 140.

The wheel brake apparatus 130 is located at the perpendicular intersection of the longitudinal axis of the base 105. The wheel brake apparatus 130 comprises four brake pads 170, two brake pads 170 located proximate each wheel 135 of the wheel unit. The brake pads 170 are arranged to engage with the wheels 135 of the wheel unit so as to urge the wheels 135 into a stationary braked position.

The brake mechanism 125 comprises an elongate brake member 175 coupled to each wheel 135 of the wheel unit. The elongate brake member 175 is a bar with hexagonal cross section configured to rotate about its longitudinal axis. The elongate brake member 175 extends between the two wheels 135 in a direction substantially parallel to the base 105. The brake mechanism 125 further comprises an inextensible cable 180 connected to the elongate member 145.

The brake mechanism 135 further comprises a cam 185 with the cable 180 being coupled to the cam 185. The cam 185 is configured to transfer linear motion of the cable 180 to rotational motion via the elongate brake member 175. The cam comprises an arm 190 in communication with the cable 180 and the elongate brake member 175 to increase the moment force of the cable 180 on the elongate brake member 175. The cable 180 is connected to the arm 190 at a first distal end and the cam 185 is connected to the arm 190 at a second distal end.

The brake mechanism 125 comprises two resilient members 195 operably coupled to the cable 180, the resilient members 195 biasing the brake mechanism 125 to a brake position, wherein the brake pads 170 are in contact with the wheels 135 and the motion of the wheels 135 is urged to stationary. The resilient members 195 are connected to the elongate brake member 175 via the cam 185. Each resilient member 195 is also connected to a fixed portion of the brake mechanism 125. The resilient members 195 are springs.

When a force or tension is applied to the cable 180, the force is transferred to the cam 185 via the arm 190. The cam 185 is rotated about the longitudinal axis of the elongate brake member 175. In this way, a force is applied to each resilient member 195 such that each spring is extended and temporarily deformed. When tension is removed from the cable 180 the resilient members 195 return to their undeformed position, such that the elongate brake member 175 rotates to its braked positon. When the resilient members 195 are under no deformation, the wheel brake apparatus is coupled and the brake is engaged.

As both handle members 140 are independently connected to the brake mechanism 125, actuation of one handle member 140 will result in the same quantity of rotation of the cam 185 and the elongate brake member 175 as actuation of one of the handle members 140.

When the wheel brake apparatus is engaged, the brake pads 170 are configured to engage with a portion of the wheels 135. Friction between the brake pads 170 and the surface of the wheels 135 of the wheel unit urges each wheel 135 into a stationary braked position. When the wheels 135 of the wheel unit are stationary, the frictional forces are such that resistance to wheel motion keeps the wheel stationary when subjected to standard forces the trolley apparatus experiences, in use. When the wheel brake apparatus is decoupled, the brake pads 170 are disengaged from the surface of the wheels 135.

In use, the user can actuate one of the handle members 140, and the rotational motion of the handle member 140 will be translated to rotate the elongate member 145. Such motion will increase tension in the cable 180 such that the cable 180 pulls on the arm 110. Motion of the arm 190 rotates the cam 195, which in turn rotates the elongate brake member 175. As the hexagonal bar of the elongate brake member 175 is coupled to an elongated round cam 185, as the elongate brake member 175 rotates, a force towards the wheels 135 will push the brake pads 170 downwards onto the wheels 135.

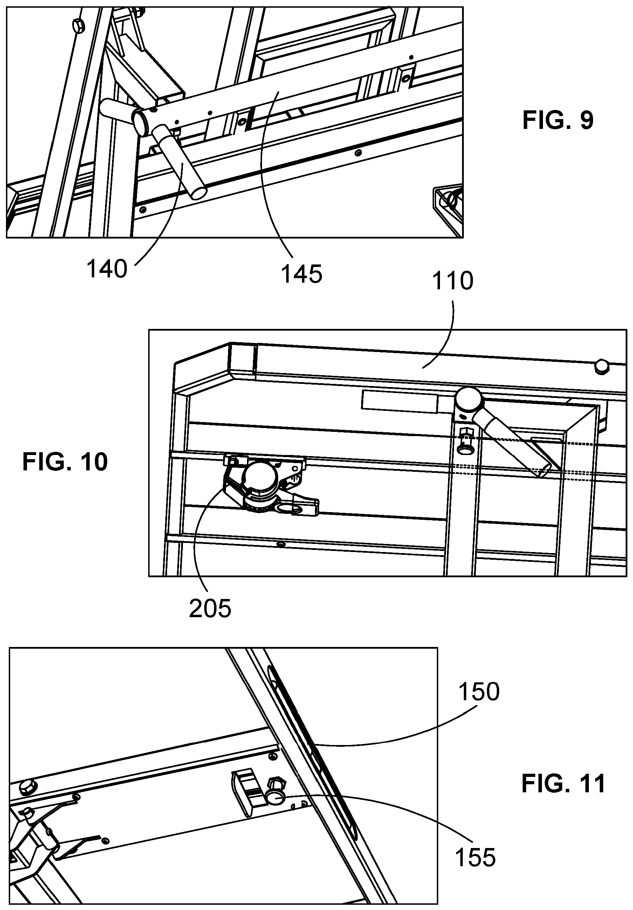

The pivotable member 110 comprises a telescopic hand accommodation portion 150 located centrally along long edge and at the perimeter of the pivotable member 110. The hand accommodation portion 150 comprises a locking member 155 configured to lock the hand accommodation portion 150 in each of the plurality of telescopically extended positions. The hand accommodation portion 150 comprises a non-telescopic position, as shown in Figures 1 and 11, wherein substantially no portion of the hand accommodation portion 150 extends beyond the perimeter of the pivotable member 110.

The pivotable member 110 comprises a counterbalance unit configured to prevent rotation of the pivotable member 110 unless a force is applied to the hand accommodation portion 150.

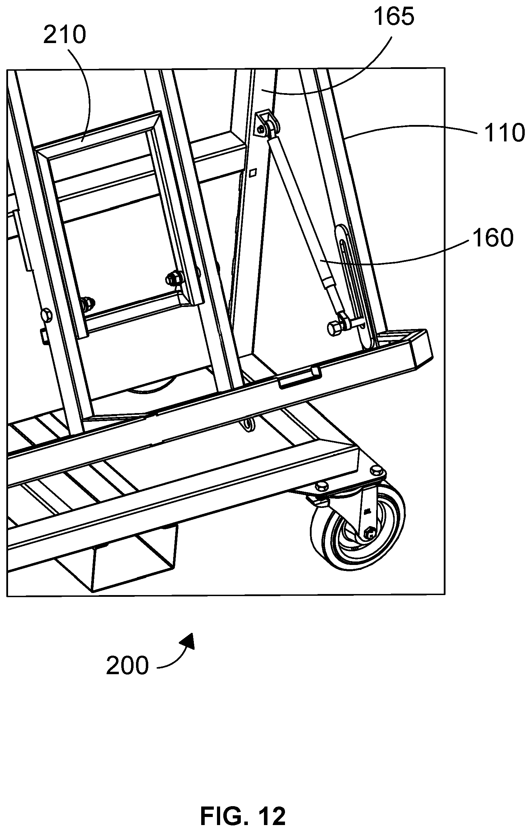

Figure 12 depicts a second embodiment of the trolley apparatus 100 of Figures 1-11. The trolley apparatus 200 of Figure 12 is substantially identical to the trolley apparatus 100 of Figures 1-11 except that the trolley apparatus 200 of Figure 12 comprises a pair of pneumatic members 160. The counterbalance unit comprises two pneumatic members 160, each pneumatic member 160 comprising a gas strut. The pneumatic members 160 are located at opposing distal ends of the pivotable member 110. Each pneumatic member 160 is connected at a first end to the upstanding portion 165 and at a second end to the underside of the pivotable member 110. The feature of the pair of pneumatic members 160 may be directly applied to the trolley apparatus 100 of Figures 1-11.

Each pneumatic member 160 comprises an adjustable member configured to adjust the location of the connection of the second end of the pneumatic member 160 to the pivotable member 110. The adjustable member comprises a linear pathway along which the second end of the pneumatic member 160 is configured to traverse. The linear pathway is parallel to an edge of the pivotable member 110. The first end of each pneumatic member 160, namely the end of the pneumatic member 160 attached to the upstanding portion 165, is pivotably connected to the upstanding portion 165 to facilitate motion of the second end in the adjustable member.

The counterbalance unit comprises a locking unit configured to lock the pivotable member 110 in the first position and the second position. The counterbalance unit prevents unwanted pivoting of the pivotable member 110 in both directions about its longitudinal axis.

The pivotable member 110 is connected to the upstanding portion 165 of the frame 115 along the central longitudinal axis of the pivotable member 110. The width of the pivotable member 110 is such that a portion of the pivotable member 110 contacts the base 105 when the pivotable member 110 is in the second position. The pivoting motion of the pivotable member 110 is independent of the brake mechanism 125, such that the brake mechanism 135 can be actuated regardless of the position of the pivotable member 110.

The base 105 comprises a carrying member 200 configured to allow the trolley apparatus 100 to be carried by a forklift truck. The carrying member 200 comprises two hollow beams configured to house each respective fork of a standard forklift truck. In this way, the forks of a forklift truck can be inserted into the forklift carrying member to allow the forklift truck to carry and transport the trolley apparatus 10. The two beams of the forklift carrying member 200 extend the width of the base 105. The carrying member 200 is located on the underside of the frame 105.

The trolley apparatus 100 further comprises a load retention portion comprising two ratchet straps 205 configured to retain at least a portion of a load located on the pivotable member 110. The ratchet straps 205 are located on the equidistant on the length of, and on the underside of, the pivotable member 110 and are configured to extend about at least two faces of the pivotable member 110.

The trolley apparatus 100 comprises a load structure 215 extending the perimeter of the pivotable member 110. The load structure 215 extends perpendicular to the pivotable member 110 and is configured to support a load located on the pivotable member 110, in particular when the pivotable member 110 is in the second position.

The trolley apparatus 100 further comprises a load support member 210 located on the pivotable member 110 and configured in a first position to sit flush against the pivotable member 110. In a second position, the load support member 210 is configured to be pivoted to a position substantially perpendicular to the pivotable member 110. The load support member 210 provides a support surface to support a load located on the pivotable member 110, in use. The load support member 210 comprises two rectangular frames located equidistant on the pivotable member 110. The rectangular frames are configured to rotate towards the load structure 215 to support a load located on the pivotable member 110, in particular when the pivotable member 110 is in the second position. The load support structure 210 further supports loads located on the pivotable member 110 from moving while the trolley apparatus 100 is in transit.

The present invention is particularly advantageous as a large number of goods, such as stacks of plasterboards, can be transported safely with a means of firstly securing the goods onto the trolley apparatus and then pivoting the pivotable member to fit the apparatus and goods through restrictive areas such as corridors or doorways. Further, the deadman brake improves safety if a user loses control the trolley apparatus. The telescopic handle members allow the user to actuate the brake mechanism from an area of reduced danger non-dangerous area during the manoeuvring of the trolley apparatus. The trolley apparatus acts as a workbench to action the goods, such as cutting or scoring boards loaded on the trolley apparatus.

## Claims

1. A load bearing manual handling trolley apparatus (100), said trolley apparatus (100) comprising:
a frame comprising a base (105), said base (105) comprising a front face, a rear face and two connecting faces arranged so as to form a supportive base with four corners;
said trolley apparatus (100) further comprising a pivotable member (110) pivotably connected to said frame (115), said pivotable member (110) configured to pivot between a first position and a second position;
at least one wheel (120) located at each corner portion of said base (105);
a brake mechanism (125) comprising a wheel unit and a wheel brake apparatus (130) for engaging said wheel unit, said wheel unit comprising at least one wheel (135);
at least one handle member (140) located on said frame (115);
an elongate member (145), said elongate member (145) connecting each of said at least one handle members (140) to said brake mechanism (125), and arranged in operative communication with the wheel brake apparatus (130) and arranged to actuate the wheel brake apparatus (130) such that actuation of any one of said at least one handle members (140) decouples said brake mechanism (125);
wherein said elongate member (145) is arranged to rotate about its longitudinal axis and actuation of the at least one handle member (140) rotates the elongate member (145) about its longitudinal axis;
wherein said elongate member (145) is biased to the braked configuration; wherein a portion of said at least one handle member (140) projects beyond the length of said pivotable member (110);
**characterised in that** said at least one handle member (140) is telescopic in a direction (T1, T2) away from said frame (115).

2. The load bearing manual handling trolley apparatus (100) of claim 1, wherein said at least one handle member (140) is located at an end of said elongate member (145).

3. The load bearing manual handling trolley apparatus (100) of any one preceding claim, wherein said pivotable member (110) comprises at least one hand accommodation portion (150).

4. The load bearing manual handling trolley apparatus (100) of claim 3, wherein said pivotable member (110) comprises a counterbalance unit configured to prevent rotation of the pivotable member (110) unless a force is applied to the at least one hand accommodation portion (150),
wherein the counterbalance unit comprises at least one pneumatic member (160), the pneumatic member (160) connecting said frame (115) to said pivotable member (110).

5. The load bearing manual handling trolley apparatus (100) of claim 4, wherein said counterbalance unit comprises two pneumatic members (160) located at opposing distal ends of said frame (115).

6. The load bearing manual handling trolley apparatus (100) of any one preceding claim, wherein said pivotable member (110) is connected to said frame (115) along the longitudinal axis of said frame (115),
wherein said frame (115) comprises an upstanding portion (165) extending along a portion of its longitudinal axis and in a direction away from said base (105), said pivotable member (110) connected to said upstanding portion (165).

7. The load bearing manual handling trolley apparatus (100) of any one preceding claim, wherein in the first position, said pivotable member (110) is substantially parallel to the base (105),
wherein in the second position, said pivotable member (110) is substantially flat against said frame (115).

8. The load bearing manual handling trolley apparatus (100) of any one preceding claim, wherein said brake mechanism (125) comprises a cable (180) connected to said elongate member (145).

9. The load bearing manual handling trolley apparatus (100) of claim 8, wherein said brake mechanism (125) comprises an elongate brake member (175) coupled to each wheel (135) of said wheel unit and wherein said elongate brake member (175) is configured to rotate about its longitudinal axis.

10. The load bearing manual handling trolley apparatus (100) of claim 9, wherein said brake mechanism (125) further comprises at least one cam (185) configured to transfer linear motion of said cable (180) to rotational motion via said elongate brake member (175).

11. The load bearing manual handling trolley apparatus (100) of claim 10, wherein said at least one cam (185) comprises an arm (190) in communication with said cable (180) and said elongate brake member (175).

12. The load bearing manual handling trolley apparatus (100) of any one preceding claim, wherein the wheel brake apparatus (130) comprises a friction brake.

13. The load bearing manual handling trolley apparatus (100) of any one preceding claim, wherein said elongate member (145) extends along substantially the entire length of said frame (115).

14. The load bearing manual handling trolley apparatus (100) of any one preceding claim, wherein said trolley apparatus (100) comprises at least one load retention portion configured to retain at least a portion of a load on said trolley apparatus (100),
wherein the at least one load retention portion comprises a retaining member and a retaining member acceptance portion.

15. The load bearing manual handling trolley apparatus (100) of any one preceding claim, wherein said trolley apparatus (100) comprises a forklift carrying member (200) configured to allow said trolley apparatus (100) to be carried by a forklift truck.

## Patentansprüche

1. Eine lasttragende manuelle Transportwagenvorrichtung (100), wobei die Wagenvorrichtung (100) Folgendes beinhaltet:
einen Rahmen, der eine Basis (105) beinhaltet, wobei die Basis (105) eine Vorderfläche, eine Rückfläche und zwei Verknüpfungsflächen beinhaltet, die so eingerichtet sind, dass sie eine tragende Basis mit vier Ecken bilden;
wobei die Wagenvorrichtung (100) ferner ein schwenkbares Element (110) beinhaltet, das schwenkbar mit dem Rahmen (115) verknüpft ist, wobei das schwenkbare Element (110) dazu konfiguriert ist, zwischen einer ersten Position und einer zweiten Position zu schwenken;
mindestens ein Rad (120), das sich an jedem Eckabschnitt der Basis (105) befindet; einen Bremsmechanismus (125), der eine Radeinheit und eine Radbremsvorrichtung (130) zum Eingreifen in die Radeinheit beinhaltet, wobei die Radeinheit mindestens ein Rad (135) beinhaltet;
mindestens ein Griffelement (140), das sich an dem Rahmen (115) befindet;
ein längliches Element (145), wobei das längliche Element (145) jedes des mindestens einen Griffelements (140) mit dem Bremsmechanismus (125) verknüpft und in Wirkverbindung mit der Radbremsvorrichtung (130) eingerichtet ist und dazu eingerichtet ist, die Radbremsvorrichtung (130) so zu betätigen, dass die Betätigung eines beliebigen des mindestens einen Griffelements (140) den Bremsmechanismus (125) entkoppelt;
wobei das längliche Element (145) dazu eingerichtet ist, sich um seine Längsachse zu drehen, und die Betätigung des mindestens einen Griffelements (140) das längliche Element (145) um seine Längsachse dreht;
wobei das längliche Element (145) in die gebremste Konfiguration vorgespannt ist;
wobei ein Abschnitt des mindestens einen Griffelements (140) über die Länge des schwenkbaren Elements (110) hinausragt;
**dadurch gekennzeichnet, dass** das mindestens eine Griffelement (140) in einer Richtung (T1, T2) weg von dem Rahmen (115) teleskopisch ist.

2. Lasttragende manuelle Transportwagenvorrichtung (100) gemäß Anspruch 1, wobei sich das mindestens eine Griffelement (140) an einem Ende des länglichen Elements (145) befindet.

3. Lasttragende manuelle Transportwagenvorrichtung (100) gemäß einem der vorhergehenden Ansprüche, wobei das schwenkbare Element (110) mindestens einen Handaufnahmeabschnitt (150) beinhaltet.

4. Lasttragende manuelle Transportwagenvorrichtung (100) gemäß Anspruch 3, wobei das schwenkbare Element (110) eine Gegengewichtseinheit beinhaltet, die dazu konfiguriert ist, eine Drehung des schwenkbaren Elements (110) zu verhindern, sofern keine Kraft auf den mindestens einen Handaufnahmeabschnitt (150) ausgeübt wird, wobei die Gegengewichtseinheit mindestens ein pneumatisches Element (160) beinhaltet, wobei das pneumatische Element (160) den Rahmen (115) mit dem schwenkbaren Element (110) verknüpft.

5. Lasttragende manuelle Transportwagenvorrichtung (100) gemäß Anspruch 4, wobei die Gegengewichtseinheit zwei pneumatische Elemente (160) beinhaltet, die sich an gegenüberliegenden distalen Enden des Rahmens (115) befinden.

6. Lasttragende manuelle Transportwagenvorrichtung (100) gemäß einem der vorhergehenden Ansprüche, wobei das schwenkbare Element (110) entlang der Längsachse des Rahmens (115) mit dem Rahmen (115) verknüpft ist,
wobei der Rahmen (115) einen aufrechten Abschnitt (165) beinhaltet, der sich entlang eines Abschnitts seiner Längsachse und in einer Richtung weg von der Basis (105) erstreckt, wobei das schwenkbare Element (110) mit dem aufrechten Abschnitt (165) verknüpft ist.

7. Lasttragende manuelle Transportwagenvorrichtung (100) gemäß einem der vorhergehenden Ansprüche, wobei das schwenkbare Element (110) in der ersten Position im Wesentlichen parallel zu der Basis (105) ist,
wobei das schwenkbare Element (110) in der zweiten Position im Wesentlichen flach an dem Rahmen (115) anliegt.

8. Lasttragende manuelle Transportwagenvorrichtung (100) gemäß einem der vorhergehenden Ansprüche, wobei der Bremsmechanismus (125) ein Kabel (180) beinhaltet, das mit dem länglichen Element (145) verknüpft ist.

9. Lasttragende manuelle Transportwagenvorrichtung (100) gemäß Anspruch 8, wobei der Bremsmechanismus (125) ein längliches Bremselement (175) beinhaltet, das mit jedem Rad (135) der Radeinheit verknüpft ist, und wobei das längliche Bremselement (175) dazu konfiguriert ist, sich um seine Längsachse zu drehen.

10. Lasttragende manuelle Transportwagenvorrichtung (100) gemäß Anspruch 9, wobei der Bremsmechanismus (125) ferner mindestens einen Nocken (185) beinhaltet, der dazu konfiguriert ist, eine Linearbewegung des Kabels (180) über das längliche Bremselement (175) in eine Drehbewegung zu übertragen.

11. Lasttragende manuelle Transportwagenvorrichtung (100) gemäß Anspruch 10, wobei der mindestens eine Nocken (185) einen Arm (190) in Verbindung mit dem Kabel (180) und dem länglichen Bremselement (175) beinhaltet.

12. Lasttragende manuelle Transportwagenvorrichtung (100) gemäß einem der vorhergehenden Ansprüche, wobei die Radbremsvorrichtung (130) eine Reibungsbremse beinhaltet.

13. Lasttragende manuelle Transportwagenvorrichtung (100) gemäß einem der vorhergehenden Ansprüche, wobei sich das längliche Element (145) entlang im Wesentlichen der gesamten Länge des Rahmens (115) erstreckt.

14. Lasttragende manuelle Transportwagenvorrichtung (100) gemäß einem der vorhergehenden Ansprüche, wobei die Wagenvorrichtung (100) mindestens einen Lasthalteabschnitt beinhaltet, der dazu konfiguriert ist, mindestens einen Teil einer Last auf der Wagenvorrichtung (100) zu halten,
wobei der mindestens eine Lasthalteabschnitt ein Halteelement und einen Halteelementempfangsabschnitt beinhaltet.

15. Lasttragende manuelle Transportwagenvorrichtung (100) gemäß einem der vorhergehenden Ansprüche, wobei die Wagenvorrichtung (100) ein Staplertrageelement (200) beinhaltet, das dazu konfiguriert ist, zu ermöglichen, dass die Wagenvorrichtung (100) von einem Gabelstapler getragen wird.

## Revendications

1. Un appareil formant chariot (100) de manutention manuelle porteur de charge, ledit appareil formant chariot (100) comprenant :
un châssis comprenant une base (105), ladite base (105) comprenant une face avant,
une face arrière et deux faces de raccordement agencées de façon à former une base d'appui avec quatre coins ;
ledit appareil formant chariot (100) comprenant en outre un élément pouvant pivoter (110) raccordé audit châssis (115) de façon à pouvoir pivoter, ledit élément pouvant pivoter (110) étant configuré pour pivoter entre une première position et une deuxième position ;
au moins une roue (120) située au niveau de chaque portion formant coin de ladite base (105) ;
un mécanisme de freinage (125) comprenant un bloc-roue et un dispositif de freinage de roue (130) pour mettre en prise ledit bloc-roue, ledit bloc-roue comprenant au moins une roue (135) ;
au moins un élément formant poignée (140) situé sur ledit châssis (115) ;
un élément allongé (145), ledit élément allongé (145) raccordant chacun desdits au moins un élément formant poignée (140) audit mécanisme de freinage (125), et agencé en communication opérationnelle avec le dispositif de freinage de roue (130) et agencé pour actionner le dispositif de freinage de roue (130) de telle sorte que l'actionnement de l'un quelconque desdits au moins un élément formant poignée (140) découple ledit mécanisme de freinage (125) ;
où ledit élément allongé (145) est agencé pour tourner autour de son axe longitudinal et l'actionnement de l'au moins un élément formant poignée (140) fait tourner l'élément allongé (145) autour de son axe longitudinal ;
où ledit élément allongé (145) est sollicité jusqu'à la configuration freinée ;
où une portion dudit au moins un élément formant poignée (140) fait saillie au-delà de la longueur dudit élément pouvant pivoter (110) ;
**caractérisé en ce que** ledit au moins un élément formant poignée (140) est télescopique dans une direction (T1, T2) s'éloignant dudit châssis (115).

2. L'appareil formant chariot (100) de manutention manuelle porteur de charge de la revendication 1, où ledit au moins un élément formant poignée (140) est situé au niveau d'une extrémité dudit élément allongé (145).

3. L'appareil formant chariot (100) de manutention manuelle porteur de charge de n'importe quelle revendication précédente, où ledit élément pouvant pivoter (110) comprend au moins une portion d'accueil de main (150).

4. L'appareil formant chariot (100) de manutention manuelle porteur de charge de la revendication 3, où ledit élément pouvant pivoter (110) comprend une unité de contrepoids configurée pour empêcher la rotation de l'élément pouvant pivoter (110) à moins qu'une force ne soit appliquée à l'au moins une portion d'accueil de main (150), où l'unité de contrepoids comprend au moins un élément pneumatique (160), l'élément pneumatique (160) raccordant ledit châssis (115) audit élément pouvant pivoter (110).

5. L'appareil formant chariot (100) de manutention manuelle porteur de charge de la revendication 4, où ladite unité de contrepoids comprend deux éléments pneumatiques (160) situés au niveau d'extrémités distales opposées dudit châssis (115).

6. L'appareil formant chariot (100) de manutention manuelle porteur de charge de n'importe quelle revendication précédente, où ledit élément pouvant pivoter (110) est raccordé audit châssis (115) le long de l'axe longitudinal dudit châssis (115),
ledit châssis (115) comprenant une portion dressée (165) s'étendant le long d'une portion de son axe longitudinal et dans une direction s'éloignant de ladite base (105), ledit élément pouvant pivoter (110) étant raccordé à ladite portion dressée (165).

7. L'appareil formant chariot (100) de manutention manuelle porteur de charge de n'importe quelle revendication précédente, où, dans la première position, ledit élément pouvant pivoter (110) est substantiellement parallèle à la base (105),
où, dans la deuxième position, ledit élément pouvant pivoter (110) est substantiellement à plat contre ledit châssis (115).

8. L'appareil formant chariot (100) de manutention manuelle porteur de charge de n'importe quelle revendication précédente, où ledit mécanisme de freinage (125) comprend un câble (180) raccordé audit élément allongé (145).

9. L'appareil formant chariot (100) de manutention manuelle porteur de charge de la revendication 8, où ledit mécanisme de freinage (125) comprend un élément de freinage allongé (175) couplé à chaque roue (135) dudit bloc-roue et où ledit élément de freinage allongé (175) est configuré pour tourner autour de son axe longitudinal.

10. L'appareil formant chariot (100) de manutention manuelle porteur de charge de la revendication 9, où ledit mécanisme de freinage (125) comprend en outre au moins une came (185) configurée pour transférer un mouvement linéaire dudit câble (180) en un mouvement rotationnel via ledit élément de freinage allongé (175).

11. L'appareil formant chariot (100) de manutention manuelle porteur de charge de la revendication 10, où ladite au moins une came (185) comprend un bras (190) en communication avec ledit câble (180) et ledit élément de freinage allongé (175).

12. L'appareil formant chariot (100) de manutention manuelle porteur de charge de n'importe quelle revendication précédente, où le dispositif de freinage de roue (130) comprend un frein à friction.

13. L'appareil formant chariot (100) de manutention manuelle porteur de charge de n'importe quelle revendication précédente, où ledit élément allongé (145) s'étend substantiellement sur toute la longueur dudit châssis (115).

14. L'appareil formant chariot (100) de manutention manuelle porteur de charge de n'importe quelle revendication précédente, où ledit appareil formant chariot (100) comprend au moins une portion de rétention de charge configurée pour retenir au moins une portion d'une charge sur ledit appareil formant chariot (100),
où l'au moins une portion de rétention de charge comprend un élément de retenue et une portion d'admission d'élément de retenue.

15. L'appareil formant chariot (100) de manutention manuelle porteur de charge de n'importe quelle revendication précédente, où ledit appareil formant chariot (100) comprend un élément de portage par élévateur à fourche (200) configuré pour permettre audit appareil formant chariot (100) d'être porté par un engin élévateur à fourche.
